# EUROPÄISCHE PATENTSCHRIFT

(11) **EP 1 979 557 B1**
(45) Veröffentlichungstag und Bekanntmachung des Hinweises auf die Patenterteilung: **13.05.2009**
(21) Anmeldenummer: 06818098.3
(22) Anmeldetag: 23.11.2006
(51) Int. Cl.: E04C 5/16, F16B 7/18

(54) **VORRICHTUNG ZUR KOPPLUNG ZWEIER BAUTEILE**
DEVICE FOR COUPLING TWO COMPONENTS
DISPOSITIF D'ACCOUPLEMENT DE DEUX COMPOSANTS

(30) Priorität: 31.01.2006 DE 102006004631; 29.03.2006 DE 102006014806
(43) Veröffentlichungstag der Anmeldung: 15.10.2008
(73) Patentinhaber: BBV Vorspanntechnik GMBH, 67240 Bobenheim-Roxheim (DE)
(72) Erfinder: DAUM, Karlheinz, 67133 Maxdorf (DE); CHUA, Robert, Bacolod City 6100 (PH)
(74) Vertreter: Ullrich & Naumann
(86) Internationale Anmeldenummer: PCT/DE2006/002071
(87) Internationale Veröffentlichungsnummer: WO 2007/087770

(56) Entgegenhaltungen:
- EP-A1- 1 034 344
- WO-A-00/66852
- WO-A-01/55526
- WO-A-92/08019
- WO-A-20/05100714
- DE-A1- 1 609 671
- FR-A1- 2 207 232
- GB-A- 2 255 385
- JP-A- 4 011 148
- JP-A- 2001 032 388
- JP-A- 2002 146 969
- JP-U- 3 004 832
- US-A- 5 967 691

## Beschreibung

Die vorliegende Erfindung betrifft eine Vorrichtung zur Kopplung zweier Bauteile, insbesondere zweier Stangen oder Stäbe, mit zwei jeweils an zu koppelnden Enden der Bauteile anordenbaren Kopplungsteilen und einem mit den Kopplungsteilen in Eingriff bringbaren Verbindungsmittel.

Eine Vorrichtung der eingangs genannten Art ist beispielsweise aus der EP 1 034 344 B1 bekannt. Die bekannte Vorrichtung dient zur Kopplung zweier Gewindestäbe, wobei an den zu koppelnden Enden der Gewindestäbe Kopplungsteile in Form von Muttern angeordnet bzw. auf die Enden aufgeschraubt werden. Als Verbindungsmittel dient ein längliches hohles quaderförmiges Verbindungsstück, dessen beide voneinander beabstandeten Stirnseiten Widerlager für die Muttern bilden. Zum Koppeln der Gewindestäbe werden die Gewindestäbe mit aufgeschraubter Mutter in Ausnehmungen des Verbindungsstücks eingesetzt, so dass die Muttern innerhalb des hohlen Teils angeordnet sind. Durch weiteres Aufschrauben der Muttern auf die Gewindestäbe werden die Gewindestäbe, das Verbindungsstück und die Muttern miteinander verspannt, so dass eine Kopplung der Gewindestäbe oder Bauteile realisiert ist.

Bei der bekannten Vorrichtung ist problematisch, dass eine Kopplung der zu koppelnden Bauteile nur dann sicher möglich ist, wenn sich die Bauteile bzw. Gewindestäbe schon vor ihrer Kopplung in einer recht gut miteinander fluchtenden Position befinden. Sofern ein Parallelversatz und/oder ein Winkelversatz der Stäbe vor ihrer Kopplung einen vorgegebenen Wert überschreiten oder überschreitet, ist eine sichere Kopplung der Stäbe nicht mehr oder nur noch mit großem Aufwand und Krafteinsatz möglich.

Eine Vorrichtung zur Kopplung gemäß dem Oberbegriff des Anspruchs 1 ist aus dem JP 03004832 U bekannt.

In der Praxis hat sich jedoch gezeigt, dass insbesondere bei der Kopplung von Stäben eines Bewehrungskorbs, bei dem viele Stäbe miteinander zu koppeln sind, häufig ein unregelmäßiger Abstand der Stäbe in Längsrichtung, ein Versatz der Stäbe in Querrichtung und/oder ein Winkelversatz der Stäbe vorliegt. Bei einer Kopplung derartiger Stäbe eines Bewehrungskorbs ist die bekannte Vorrichtung nicht zufrieden stellend einsetzbar.

Der vorliegenden Erfindung liegt daher die Aufgabe zugrunde, eine Vorrichtung zur Kopplung zweier Bauteile derart auszugestalten und weiterzubilden, dass eine sichere Kopplung von Bauteilen auch bei ungünstiger Vorpositionierung mit konstruktiv einfachen Mitteln erreicht ist.

Erfindungsgemäß wird die voranstehende Aufgabe durch eine Vorrichtung mit den Merkmalen des Patentanspruches 1 gelöst. Danach ist die Vorrichtung zur Kopplung zweier Bauteile derart ausgestaltet und weitergebildet, dass das Verbindungsmittel mindestens zwei zum Umgreifen der Kopplungsteile aneinander anordenbare und mittels mindestens einer Klemmeinrichtung aneinander fixierbare Halteelemente aufweist.

Es ist erkannt worden, dass die Ausbildung des Verbindungsmittels mit mindestens zwei zum Umgreifen der Kopplungsteile aneinander anordenbaren Halteelementen, die mittels mindestens einer Klemmeinrichtung aneinander fixierbar sind, die voranstehende Aufgabe auf überraschend einfache Weise löst. Durch die Ausgestaltung des Verbindungsmittels mit zwei Halteelementen, die um die Kopplungsteile angeordnet werden können, ist ein wesentlich größerer Parallel- und/oder Winkelversatz der zu koppelnden Bauteile vor ihrer Kopplung kompensierbar als dies bei herkömmlichen Vorrichtungen möglich ist. Nach dem Anordnen der Halteelemente um die Kopplungsteile können die Halteelemente auf einfache Weise mittels einer Klemmeinrichtung aneinander fixiert werden, wodurch die Kopplung der Bauteile realisiert wird und oftmals eine Reduzierung eines ursprünglich vorhandenen Parallel- und/oder Winkelversatzes der Bauteile realisierbar ist.

Folglich ist mit der erfindungsgemäßen Vorrichtung zur Kopplung zweier Bauteile eine Vorrichtung angegeben, bei der eine sichere Kopplung von Bauteilen auch bei ungünstiger Vorpositionierung mit konstruktiv einfachen Mitteln erreicht ist.

In konstruktiv besonders einfacher Weise könnten die Kopplungsteile jeweils ein Gewinde zum Aufschrauben auf an den Enden der Bauteile ausgebildete Gewinde aufweisen. Zur Anordnung der Kopplungsteile an den zu koppelnden Bauteilen müsste dann lediglich ein Aufschrauben der Kopplungsteile auf die Enden der Bauteile in einem geeigneten Ausmaß erfolgen. Anschließend kann dann die Kopplung durch das Umgreifen der Kopplungsteile mit den Halteelementen erfolgen.

Im Hinblick auf eine sichere Aufnahme der Kopplungsteile in den Halteelementen könnten die Kopplungsteile im Wesentlichen zylinderförmig mit einem in Längsrichtung ausgebildetem Innengewinde ausgebildet sein.

Im Hinblick auf eine sichere und einfache Anordnung der Kopplungsteile an den Enden der Bauteile könnten die Kopplungsteile als Muttern ausgebildet sein, die in besonders einfacher Weise mit einem Werkzeug auf die Enden der Bauteile aufschraubbar sein könnten. Alternativ oder zusätzlich hierzu könnten die Kopplungsteile eine Ausnehmung für ein Werkzeug aufweisen.

Im Hinblick auf eine besonders sichere Aufnahme der Kopplungsteile in den Halteelementen könnten die Halteelemente im Wesentlichen als Halbschalen mit einem Hohlraum ausgebildet sein. Die Halbschalen könnten dabei derart ausgebildet sein, dass nach dem Zusammenfügen der Halteelemente ein im Wesentlichen zylinderförmiger Hohlraum für die Kopplungsteile gebildet ist.

Zur sicheren Kopplung der Bauteile könnten die Halteelemente an ihren entgegengesetzten Enden jeweils einen inneren Anschlag für jeweils ein Kopplungsteil aufweisen. Dabei werden die Kopplungsteile nach dem Fixieren der Halteelemente mittels der Klemmeinrichtung sicher innerhalb des durch die Halteelemente gebildeten Hohlraums aufgenommen. Ein ungewolltes Herausrutschen aus diesem Hohlraum wäre durch den Anschlag vermieden.

Insbesondere bei der Kopplung von Stäben oder Gewindestäben ist es vorteilhaft, die Halteelemente an ihren entgegengesetzten Enden mit jeweils einer Aussparung auszubilden. Beim aneinander Anordnen der Halteelemente könnten die Stäbe oder Gewindestäbe in die Aussparung eingefügt werden, so dass die Stäbe oder Gewindestäbe sich von außerhalb der Vorrichtung durch die Aussparung hindurch in den durch die Halteelemente gebildeten Hohlraum erstrecken. Ein Herausrutschen der Stäbe oder Gewindestäbe aus der Vorrichtung ist dann durch die an den Anschlägen anliegenden Kopplungsteile vermieden.

Hinsichtlich einer besonders sicheren Verklemmung der Halteelemente aneinander weisen die Halteelemente an ihren entgegengesetzten Enden jeweils eine zum Verspannen mit der Klemmeinrichtung geeignete Fläche auf. Im Konkreten ist die Fläche schräg oder ballig oder zumindest bereichsweise konisch ausgebildet.

In weiter vorteilhafter Weise könnten die Halteelemente einen Versatz oder Anschlag aufweisen, der vorzugsweise an die Fläche angrenzt. Ein derartiger vorzugsweise stufenförmiger Versatz könnte einen Form- und Kraftschluss zwischen dem Halteelement und der Klemmeinrichtung bewirken. Hierdurch könnte ein Zusammenhalten der als Halbschalen ausgebildeten Halteelemente gewährleistet bleiben, wenn sich die Verbindung zwischen dem Kopplungsteil und einem Bauteil unbeabsichtigt lösen sollte, beispielsweise bei einem Zerspringen des Gewindes des Kopplungsteils und/oder Bauteils. Dabei könnte eine konische Fläche des einen Halteelements mit einer konischen Fläche des angefügten Halteelements gemeinsam eine quasi vollständige konische Fläche bilden. Die konische Fläche könnte sich dabei zum Ende des Halteelements hin verjüngen.

Zur Bereitstellung einer besonders sicheren Vorrichtung zur Kopplung zweier Bauteile könnte den Halteelementen ein Klemmmittel zur Fixierung der Halteelemente aneinander zugeordnet sein. Hierdurch ist ein ungewolltes Lösen der Halteelemente voneinander noch sicherer vermieden.

Im Konkreten könnte das Klemmmittel eine die Halteelemente umgreifende Manschette oder einen durch Durchgänge in den Halteelementen hindurchsteckbaren Bolzen aufweisen. Ein derartiger Bolzen könnte quasi durch die Halteelemente hindurchgesteckt und gegen die Halteelemente verschraubt bzw. verspannt werden. Als Bolzen könnte eine bekannte Schraube mit einer Kontermutter verwendet werden.

Weiterhin zur sicheren Fixierung der Halteelemente aneinander weist die Klemmeinrichtung zwei jeweils mit den Enden der Halteelemente in Eingriff bringbare Fixierelemente auf. Hierdurch erfolgt eine sichere Fixierung der Halteelemente aneinander von beiden Enden der Halteelemente aus.

Erfindungsgemäß und in konstruktiv besonders einfacher Weise weisen die Fixierelemente jeweils ein Innengewinde zum Aufschrauben auf an den Enden der Bauteile ausgebildete Gewinde auf. Beispielsweise bei der Kopplung von Gewindestäben werden die Fixierelemente vor dem Anordnen der Kopplungsteile auf die Gewinde der Gewindestäbe weiter als die Kopplungsteile aufgeschraubt. Nach dem Anordnen der Halteelemente werden die Fixierelemente zum Fixieren der Halteelemente wieder zurück in Richtung Ende der Gewindestäbe geschraubt.

Zur sicheren Fixierung der Halteelemente weisen die Fixierelemente jeweils eine schräge oder ballige oder konische Innenfläche auf, die quasi komplementär zu einer konischen Fläche der Halteelemente ausgebildet ist. Je nach Erfordernis nehmen die einander gegenüberliegenden Flächen der Halteelemente und Fixierelemente schräge oder ballige oder konische Formen an, solange nur ein sicheres Verspannen zwischen den Fixierelementen und den Halteelementen ermöglicht ist. Beispielsweise könnten sich konische Flächen gegenüberliegen. Alternativ hierzu könnten sich eine ballige und eine schräge oder konische Fläche gegenüberliegen. Jegliche Kombination zwischen konischen, schrägen oder balligen Flächen ist hier denkbar. Beim Zurückschrauben der Fixierelemente in Richtung Enden der Bauteile oder Gewindestäbe greifen dann die Flächen der Halteelemente und Fixierelemente derart miteinander ein, dass eine sichere Fixierung der Halteelemente an den Bauteilen realisiert ist.

Im Hinblick auf eine besonders sichere Kopplung der Bauteile könnten die Fixierelemente jeweils einen Versatz oder Anschlag aufweisen. Beispielsweise könnte ein stufenförmiger Versatz eines Fixierelements mit einem komplementär ausgebildeten Versatz der Halteelemente eingreifen. Der Versatz oder Anschlag der Halteelemente und Fixierelemente müsste so ausgebildet sein, dass das Verspannen der Halteelemente und Fixierelemente in axialer Richtung gegeneinander nicht beeinträchtigt ist. Daher sollte zwischen den Halteelementen und Fixierelementen im Bereich des Versatzes ein ausreichender Spalt in radialer Richtung der Vorrichtung bereitgestellt werden.

Zur sicheren und einfachen Kopplung der Bauteile könnten die Fixierelemente ein Eingriffsmittel für ein Werkzeug aufweisen. Hierdurch ist ein besonders einfaches Koppeln der Bauteile ermöglicht. Dabei könnte das Eingriffsmittel in besonders einfacher Weise einen Außensechskant aufweisen, der mit einem üblichen Schraubenschlüssel zum Drehen des Fixierelements in Eingriff bringbar ist.

Die erfindungsgemäße Vorrichtung könnte insbesondere als Muffenverbindung für Stabsysteme verwendet werden. Dabei ist die Muffenverbindung sowohl bei einem unregelmäßigen Abstand der Stäbe in Längsrichtung als auch bei einem Versatz der Stäbe in Querrichtung und auch bei einer Winkelverdrehung der Stäbe einsetzbar. Dabei können beispielsweise Stäbe mit einem Durchmesser von 50mm miteinander gekoppelt werden. Es sind jedoch auch Stäbe mit anderen Durchmessern mit der erfindungsgemäßen Vorrichtung koppelbar. Insbesondere könnten auch Stäbe mit unterschiedlichen Durchmessern koppelbar sein, wobei hierzu lediglich die Kopplungsteile geeignet auszubilden wären, beispielsweise mit gleichgroßen Außendurchmessern und an die Außendurchmesser der zu koppelnden Stäbe angepassten unterschiedlichen Innendurchmessern. Es ist auch denkbar, nicht nur runde, sondern auch Vierkant- oder Mehrkant-Stäbe miteinander oder mit runden Stäben zu koppeln.

Zur sicheren Kopplung der Stäbe werden zuerst die Fixierelemente auf die Enden der Gewindestäbe ausreichend weit aufgeschraubt, anschließend werden die Kopplungsteile auf die Enden der Gewindestäbe aufgeschraubt, dann werden die Halteelemente um die Kopplungsteile angeordnet und schließlich die Fixierelemente wieder in Richtung der Enden der Gewindestäbe zurückgeschraubt, so dass ein Eingriff mit den Halteelementen erfolgt. Im gekoppelten Zustand liegen die Kopplungsteile sicher im durch die Halteelemente gebildeten Hohlraum und vorzugsweise an den Anschlägen der Halteelemente an.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung zweier Ausführungsbeispiele der erfindungsgemäßen Vorrichtung anhand der Zeichnung zu verweisen. In Verbindung mit der Erläuterung der bevorzugten Ausführungsbeispiele der erfindungsgemäßen Vorrichtung anhand der Zeichnung werden auch im Allgemeinen bevorzugte Ausgestaltungen und Weiterbildungen der Lehre erläutert. In der Zeichnung zeigen
- Fig. 1: in einer teilweise geschnittenen Seitenansicht sowie in einer Stirnan- sicht ein Ausführungsbeispiel einer erfindungsgemäßen Vorrichtung zur Kopplung zweier Bauteile, wobei im rechten Teil der Fig. noch zu- sätzlich ein Fixierelement der Vorrichtung in Seitenansicht gezeigt ist,
- Fig. 2: in einer teilweise geschnittenen Seitenansicht sowie in einer Stirnan- sicht das durch zwei Halteelemente gebildete Verbindungsmittel der Vorrichtung aus Fig. 1,
- Fig. 3: in einer teilweise geschnittenen Seitenansicht sowie in einer Stirnan- sicht ein Kopplungsteil der Vorrichtung aus Fig. 1 und
- Fig. 4: in einer teilweise geschnittenen Seitenansicht ein weiteres Ausführungsbeispiel einer erfindungsgemäßen Vorrichtung zur Kopplung zweier Bauteile.

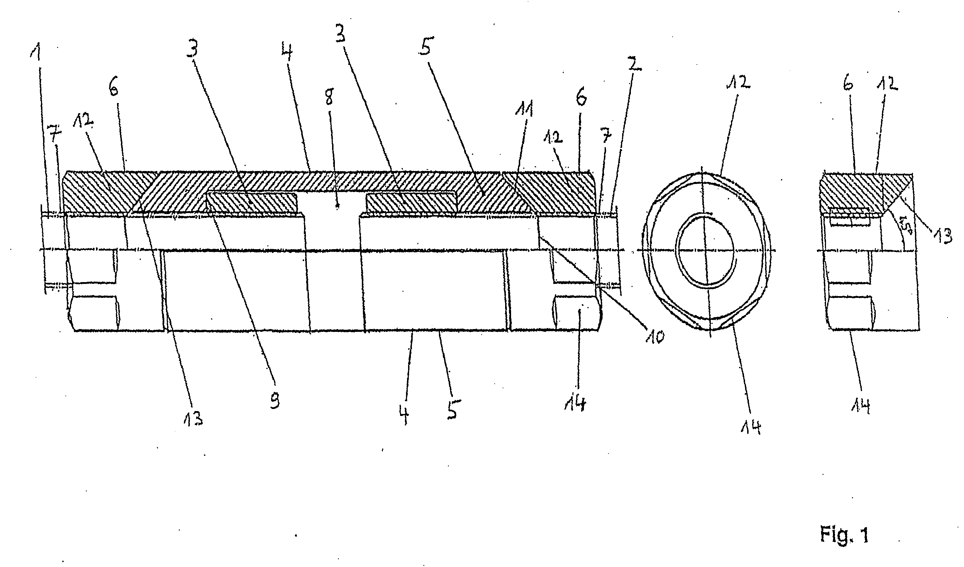

Fig. 1 zeigt in der linken Hälfte der Fig. in einer schematischen und teilweise geschnittenen Seitenansicht ein Ausführungsbeispiel der erfindungsgemäßen Vorrichtung zur Kopplung zweier Bauteile 1 und 2. Die Bauteile 1 und 2 sind durch Gewindestäbe gebildet. Die Vorrichtung weist zwei jeweils an zu koppelnden Enden der Bauteile 1 und 2 anordenbare Kopplungsteile 3 und ein mit dem Kopplungsteilen 3 in Eingriff bringbares Verbindungsmittel 4 auf. Im Hinblick auf eine sichere Kopplung der Bauteile 1 und 2 weist das Verbindungsmittel 4 mindestens zwei zum Umgreifen der Kopplungsteile 3 aneinander anordenbare und mittels einer Klemmeinrichtung 6 aneinander fixierbare Halteelemente 5 auf.

Die Kopplungsteile 3 weisen jeweils ein Innengewinde zum Aufschrauben auf die Gewinde 7 der Bauteile 1 und 2 auf. Die Kopplungsteile 3 sind im Wesentlichen zylinderförmig mit einem in Längsrichtung ausgebildeten Innengewinde ausgebildet.

Die Halteelemente 5 sind im Wesentlichen als Halbschalen mit einem Hohlraum 8 ausgebildet, in dem die Kopplungsteile 3 zur Anlage kommen. Die Halteelemente 5 weisen an ihren entgegengesetzten Enden jeweils einen inneren Anschlag 9 für jeweils ein Kopplungsteil 3 auf. Zum Hindurchstecken der als Gewindestäbe ausgebildeten Bauteile 1 und 2 weisen die Halteelemente 5 an ihren entgegengesetzten Enden jeweils eine Aussparung 10 auf. -

Zum Eingriff mit der Klemmeinrichtung 6 weisen die Halteelemente 5 an ihren entgegengesetzten Enden jeweils eine konische Fläche 11 auf. Die Klemmeinrichtung 6 weist zwei jeweils mit den Enden der Halteelemente 5 in Eingriff bringbare Fixierelemente 12 auf, die jeweils eine konische Innenfläche 13 zum Eingriff mit der konischen Fläche 11 aufweisen. Auch die Fixierelemente 12 weisen jeweils ein Innengewinde zum Aufschrauben auf an den Enden der Bauteile 1 und 2 ausgebildete Gewinde 7 auf.

Die Fixierelemente 12 weisen ein als Außensechskant 14 ausgebildetes Eingriffsmittel auf, mit dem ein einfaches Drehen des Fixierelements 12 auf dem Gewinde 7 ermöglicht ist.

Im rechten Teil der Fig. 1 ist zum einen das Ausführungsbeispiel in einer Stirnansicht dargestellt, wobei das Fixierelement 12 mit dem Außensechskant 14 erkennbar ist. Zum anderen ist in der rechten Hälfte der Fig. 1 das Fixierelement 12 nochmals in teilweise geschnittener Darstellung gezeigt, wobei die konische Innenfläche 13 besonders gut erkennbar ist.

Zum Koppeln der als Gewindestäbe ausgebildeten Bauteile 1 und 2 wird zunächst das Fixierelement 12 auf die Gewinde 7 der Bauteile 1 und 2 aufgeschraubt. Dies erfolgt soweit, dass noch genügend Platz für das Aufschrauben der Kopplungsteile 3 und das Anfügen der Halteelemente 5 vorhanden ist. Zum Fixieren der Bauteile 1 und 2 werden die Fixierelemente 12 wieder in Richtung der Enden der Bauteile 1 und 2 geschraubt, so dass die konischen Flächen 11 und 13 miteinander in Eingriff gelangen und die Halteelemente 5 gegeneinander verspannt werden. Dabei sind die auf die Enden der Bauteile 1 und 2 aufgeschraubten Kopplungsteile 3 im Hohlraum 8 der Halteelemente 5 angeordnet, wobei sich die Bauteile 1 und 2 durch die Aussparungen 10 und die Fixierelemente 12 in den Außenbereich der Vorrichtung erstrecken.

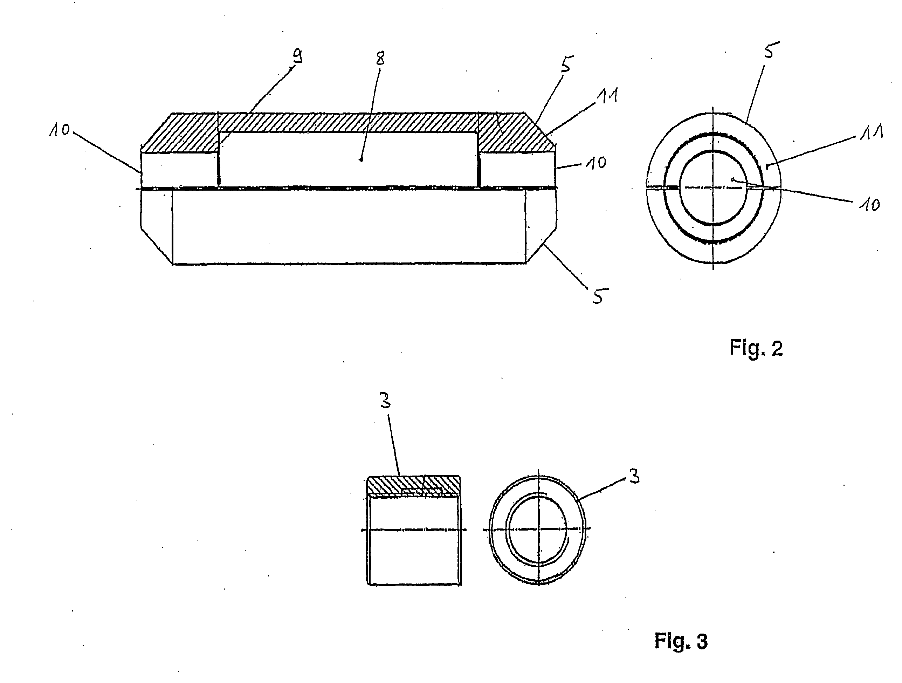

Fig. 2 zeigt in einer schematischen und teilweise geschnittenen Seitenansicht die beiden Halteelemente 5 der Vorrichtung. Die Halteelemente 5 sind im Wesentlichen als Halbschalen mit einem Hohlraum 8 ausgebildet. An ihren Enden sind halbkreisförmige Aussparungen 10 für die Bauteile 1 und 2 ausgebildet.

Im rechten Bereich der Fig. 2 sind die aneinander gefügten Halteelemente 5 in einer Stirnansicht dargestellt. Dabei blickt man einerseits durch die Aussparung 10 hindurch und andererseits auf die konische Fläche 11.

Fig. 3 zeigt in einer schematischen und teilweise geschnittenen Seitenansicht sowie in einer Stirnansicht das Kopplungsteil 3. Das Kopplungsteil 3 ist im Wesentlichen zylinderförmig mit einem in Längsrichtung ausgebildetem Innengewinde ausgebildet.

Die Halteelemente 5 sind bei dem hier dargestellten Ausführungsbeispiel quasi als halbzylindrische Schalen mit Durchgängen oder Aussparungen 10 für die zu koppelnden Bauteile 1 und 2 und einem sich an die Durchgänge oder Aussparungen 10 anschließenden vertieften Hohlraum 8 für die Kopplungsteile 3 ausgebildet. Im gekoppelten Zustand der Bauteile 1 und 2 bilden die Halteelemente 5 zusammen mit den Fixierelementen 12 im Wesentlichen einen Kreiszylinder. Der in den Halteelementen 5 gebildete Hohlraum 8 ist ebenfalls zylinderförmig.

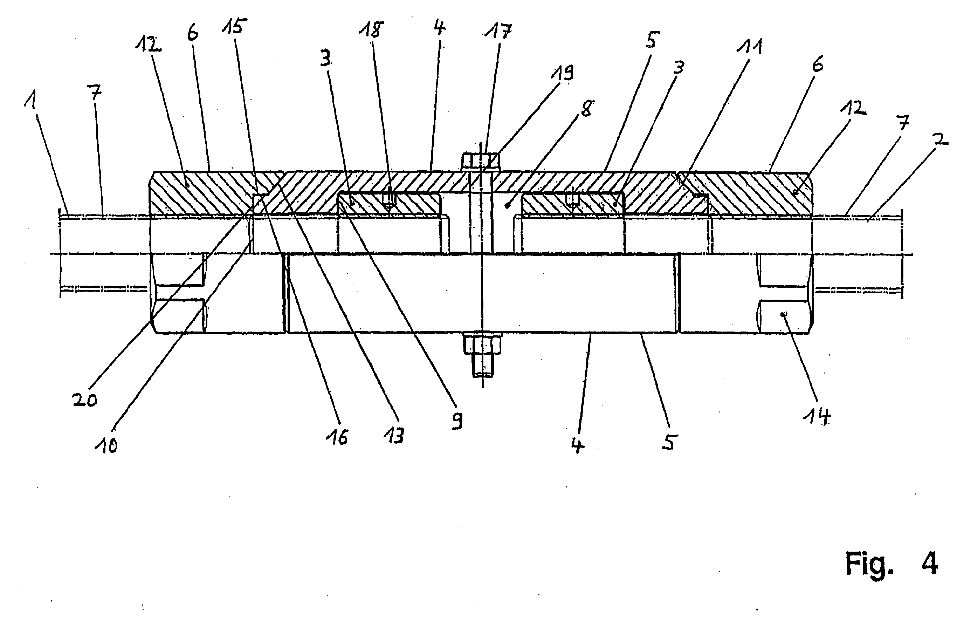

Fig. 4 zeigt in einer schematischen und teilweise geschnittenen Seitenansicht ein weiteres Ausführungsbeispiel der erfindungsgemäßen Vorrichtung zur Kopplung zweier Bauteile 1 und 2. Der grundsätzliche Aufbau dieser Vorrichtung entspricht dabei dem ersten Ausführungsbeispiel, so dass diesbezüglich zunächst auf die vorangegangene Figurenbeschreibung des ersten Ausführungsbeispiels verwiesen werden darf.

Der Unterschied zum ersten Ausführungsbeispiel besteht beim zweiten Ausführungsbeispiel zum einen darin, dass sich an die konische Fläche 11 und die konische Innenfläche 13 des Halteelements 5 und des Fixierelements 12 jeweils ein Versatz 15 bzw. 16 anschließt. Der Versatz 15 und der Versatz 16 bestehen im Konkreten aus jeweils einer zum anderen Versatz hin komplementär ausgebildeten Stufe. Selbst bei einem geringfügigen axialen Verrutschen des Bauteils 1 oder 2 bei beispielsweise einem Zerspringen der Gewindeverbindung zwischen dem Kopplungsteil 3 und dem Bauteil 1 oder 2 ist somit noch eine gegen eine radiale Bewegung geschützte Anordnung des Fixierelements 12 an den Halteelementen 5 gewährleistet. Der Versatz 15 und der Versatz 16 erstrecken sich ringförmig um die Bauteile 1 und 2. Zwischen dem Versatz 15 und dem Versatz 16 ist ein ringförmiger und sich radial erstreckender Spalt 20 ausgebildet, so dass der durch das Fixierelement 12 auf die Halteelemente 5 ausgeübte Verspannvorgang nicht aufgrund eines Kontakts zwischen dem Fixierelement 12 und den Halteelementen 5 im Bereich der Versätze 15 und 16 gestoppt wird.

Das in Fig. 4 gezeigte zweite Ausführungsbeispiel weist des Weiteren ein Klemmmittel 17 zur Fixierung der Halteelemente 5 aneinander auf. Das Klemmmittel 17 ist durch einen Bolzen gebildet, der durch Durchgänge 19 in den Halteelementen 5 hindurchsteckbar ist.

Schließlich weisen die Kopplungsteile 3 des zweiten Ausführungsbeispiels noch Ausnehmungen 18 für ein Werkzeug auf. Hierdurch ist ein Aufschrauben der Kopplungsteile 3 auf die Bauteile 1 und 2 vereinfacht.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

## Patentansprüche

1. Vorrichtung zur Kopplung zweier Bauteile (1, 2), insbesondere zweier Stangen oder Stäbe, mit zwei jeweils an zu koppelnden Enden der Bauteile (1, 2) anordenbaren Kopplungsteilen (3) und einem mit den Kopplungsteilen (3) in Eingriff bringbaren Verbindungsmittel (4), wobei das Verbindungsmittel (4) mindestens zwei zum Umgreifen der Kopplungsteile (3) aneinander anordenbare und mittels mindestens einer Klemmeinrichtung (6) aneinander fixierbare Halteelemente (5) aufweist, wobei die Halteelemente (5) an ihren entgegengesetzten Enden jeweils eine zum Verspannen mit der Klemmeinrichtung (6) geeignete Fläche (11) aufweisen und wobei die Fläche (11) schräg oder ballig oder zumindest bereichsweise konisch ausgebildet ist,
wobei die Klemmeinrichtung (6) zwei jeweils mit den Enden der Halteelemente (5) in Eingriff bringbare Fixierelemente (12) aufweist und wobei die Fixierelemente (12) jeweils eine schräge oder ballige oder konische Innenfläche (13) zum Eingriff mit jeweils einer der Flächen (11) aufweisen, **dadurch gekennzeichnet, dass** die Fixierelemente (12) jeweils ein Innengewinde zum Aufschrauben auf an den Enden der Bauteile (1, 2) ausgebildete Gewinde (7) aufweisen.

2. Vorrichtung nach Anspruch 1, **dadurch gekennzeichnet, dass** die Kopplungsteile (3) jeweils ein Gewinde zum Aufschrauben auf an den Enden der Bauteile (1, 2) ausgebildete Gewinde (7) aufweisen.

3. Vorrichtung nach Anspruch 1 oder 2, **dadurch gekennzeichnet, dass** die Kopplungsteile (3) im Wesentlichen zylinderförmig mit einem in Längsrichtung ausgebildetem Innengewinde ausgebildet sind.

4. Vorrichtung nach einem der Ansprüche 1 bis 3, **dadurch gekennzeichnet, dass** die Kopplungsteile (3) als Muttern ausgebildet sind und/oder eine Ausnehmung (18) für ein Werkzeug aufweisen.

5. Vorrichtung nach einem der Ansprüche 1 bis 4, **dadurch gekennzeichnet, dass** die Halteelemente (5) im Wesentlichen als Halbschalen mit einem Hohlraum (8) ausgebildet sind.

6. Vorrichtung nach einem der Ansprüche 1 bis 5, **dadurch gekennzeichnet, dass** die Halteelemente (5) an ihren entgegengesetzten Enden jeweils einen inneren Anschlag (9) für jeweils ein Kopplungsteil (3) aufweisen.

7. Vorrichtung nach einem der Ansprüche 1 bis 6, **dadurch gekennzeichnet, dass** die Halteelemente (5) an ihren entgegengesetzten Enden jeweils eine Aussparung (10) aufweisen.

8. Vorrichtung nach einem der Ansprüche 1 bis 7, **dadurch gekennzeichnet, dass** die Halteelemente (5) - vorzugsweise angrenzend an die Fläche (11) - einen Versatz (15) oder Anschlag aufweisen.

9. Vorrichtung nach einem der Ansprüche 1 bis 8, **dadurch gekennzeichnet, dass** den Halteelementen (5) ein Klemmmittel (17) zur Fixierung der Halteelemente (5) aneinander zugeordnet ist.

10. Vorrichtung nach Anspruch 9, **dadurch gekennzeichnet, dass** das Klemmmittel (17) eine die Halteelemente (5) umgreifende Manschette oder einen durch Durchgänge (19) in den Halteelementen (5) hindurchsteckbaren Bolzen aufweist.

11. Vorrichtung nach einem der Ansprüche 1 bis 10, **dadurch gekennzeichnet, dass** die Fixierelemente (12) jeweils einen Versatz (16) oder Anschlag aufweisen.

12. Vorrichtung nach einem der Ansprüche 1 bis 11, **dadurch gekennzeichnet, dass** die Fixierelemente (12) ein Eingriffsmittel für ein Werkzeug aufweisen.

13. Vorrichtung nach Anspruch 12, **dadurch gekennzeichnet, dass** das Eingriffsmittel einen Außensechskant (14) aufweist.

## Claims

1. A device for coupling two components (1, 2), in particular two rods or bars, having two coupling parts (3), each of which can be arranged at the ends of the components (1, 2) to be coupled, and a connecting means (4) that can be brought into engagement with the coupling parts (3), the connecting means (4) comprising at least two holding elements (5), which can be arranged on one another to encompass the coupling parts (3) and can be fixed to one another by means of at least one clamping device (6), the holding elements (5) having at their opposite ends a surface (11) suitable for bracing with the clamping device (6) and the surface (11) being of inclined or spherical or at least in parts of conical shape, the clamping device (6) comprising two fixing elements (12), each of which can be brought into engagement with a respective one of the ends of the holding elements (5) and the fixing elements (12) each having an inclined or spherical or conical inner surface (13) for engagement with a respective one of the surfaces (11), **characterised in that** the fixing elements (12) each have an internal thread for screwing onto threads (7) formed at the ends of the components (1, 2).

2. A device according to claim 1, **characterised in that** the coupling parts (3) each have a thread for screwing onto threads (7) formed at the ends of the components (1, 2).

3. A device according to claim 1 or 2, **characterised in that** the coupling parts (3) are of substantially cylindrical construction with an internal thread formed in the longitudinal direction.

4. A device according to any one of claims 1 to 3, **characterised in that** the coupling parts (3) are in the form of nuts and/or have an opening (18) for a tool.

5. A device according to any one of claims 1 to 4, **characterised in that** the holding elements (5) are constructed substantially as half-shells with a cavity (8).

6. A device according to any one of claims 1 to 5, **characterised in that** at each of their opposite ends the holding elements (5) have an internal stop (9) for a respective coupling part (3).

7. A device according to any one of claims 1 to 6, **characterised in that** at each of their opposite ends the holding elements (5) have a recess (10).

8. A device according to any one of claims 1 to 7, **characterised in that** the holding elements (5) - preferably adjoining the surface (11) - have an offset (15) or stop.

9. A device according to any one of claims 1 to 8, **characterised in that** a clamping means (17) for fixing the holding elements (5) to one another is associated with the holding elements (5).

10. A device according to claim 9, **characterised in that** the clamping means (17) comprises a sleeve encompassing the holding elements (5) or a bolt that can be pushed through passages (19) in the holding elements (5).

11. A device according to any one of claims 1 to 10, **characterised in that** the fixing elements (12) each have an offset (16) or stop.

12. A device according to any one of claims 1 to 11, **characterised in that** the fixing elements (12) have an engagement means for a tool.

13. A device according to claim 12, **characterised in that** the engagement means comprises a hexagon head (14).

## Revendications

1. Dispositif d"accouplement de deux composants, notamment deux tringles ou deux barreaux, au moyen de deux pièces d'accouplement (3) disposées sur chaque extrémité à accoupler des composants (1, 2) et d'un moyen de liaison (4) pouvant être mis en prise avec les pièces d'accouplement (3), le moyen de liaison (4) présentant au moins deux éléments de blocage (5) disposés l'un contre l'autre pour accrocher les pièces d'accouplement (3) et fixés l'un à l'autre par au moins un système de serrage (6), les éléments de blocage (5) présentant à chacune de leurs extrémités opposées une surface (11) permettant un serrage avec le système de serrage (6), et la surface (11) étant conformée en biais ou bombée ou, au moins par secteurs, conique, le système de serrage (6) présentant deux éléments de blocage (12) pouvant chaque fois venir en prise avec les extrémités des éléments de blocage (5) et les éléments de blocage (12) présentant chaque fois une surface interne (13) en biais, bombée ou conique, respectivement pour la prise avec l'une des surfaces (11) **caractérisé en ce que** les éléments de blocage (12) présentent chaque fois un taraudage pour le vissage sur le filetage réalisé sur les extrémités des composants (1, 2).

2. Dispositif selon la revendication 1, **caractérisé en ce que** les pièces d'accouplement (3) présentent chaque fois un filetage pour le vissage sur des filetages réalisés sur les extrémités des composants (1, 2).

3. Dispositif selon la revendication 1 ou 2, **caractérisé en ce que** les pièces d'accouplement (3) sont réalisées essentiellement cylindriques avec un taraudage longitudinal.

4. Dispositif selon l'une des revendications 1 à 3, **caractérisé en ce que** les pièces d'accouplement (3) sont réalisées sous forme d'écrous et/ou présentent un évidement (8) pour un outil.

5. Dispositif selon l'une des revendications 1 à 4, **caractérisé en ce que** les éléments de blocage (5) sont réalisés essentiellement en demi-coquilles avec un espace vide (8).

6. Dispositif selon l'une des revendications 1 à 5, **caractérisé en ce que** les éléments de blocage (5) présentent chaque fois à leurs extrémités opposées une butée intérieure (9) pour une pièce d'accouplement (3) respective.

7. Dispositif selon l'une des revendications 1 à 6, **caractérisé en ce que** les éléments de blocage (5) présentent à leurs extrémités opposées une échancrure (10) respective.

8. Dispositif selon l'une des revendications 1 à 7, **caractérisé en ce que** les éléments de blocage (5) présentent, de préférence au voisinage de la surface (11) un gradin (15) ou une butée.

9. Dispositif selon l'une des revendications 1 à 8, **caractérisé en ce que** les éléments de blocage (5) disposent d'un moyen de fixation (17) pour fixer les éléments de blocage (5) les uns aux autres.

10. Dispositif selon l'une des revendications 1 à 9, **caractérisé en ce que** le moyen de fixation (17)présente un manchon entourant les éléments de blocage (5) ou un boulon traversant les éléments de blocage (5) par un des passages (19).

11. Dispositif selon l'une des revendications 1 à 10, **caractérisé en ce que** les éléments de blocage (12) présentent chacun un gradin (16) ou une butée.

12. Dispositif selon l'une des revendications 1 à 11, **caractérisé en ce que** les éléments de blocage (12) présentent un moyen de manipulation pour un outil.

13. Dispositif selon l'une des revendications 1 à 12, **caractérisé en ce que** le moyen de manipulation est un hexagone male (14).
